# EUROPEAN PATENT SPECIFICATION

(11) **EP 0 377 701 B1**
(45) Date of publication and mention of the grant of the patent: **20.07.1994**
(21) Application number: 89906683.1
(22) Date of filing: 31.05.1989
(51) Int. Cl.: B02C 23/06, B01F 17/16

(54) **GRINDING PROCESS**
MAHLVERFAHREN
PROCEDE DE BROYAGE

(30) Priority: 17.06.1988 AU 8835/88
(43) Date of publication of application: 18.07.1990
(73) Proprietor: TIOXIDE SPECIALTIES LIMITED, London W14 0QL (GB)
(72) Inventor: BRAUN, Willy, East Brighton, VIC 3187 (AU); HARTSHORN, Angus, John, Pascoe Vale South, VIC 3044 (AU)
(74) Representative: Andrae, Steffen, Dr.
(86) International application number: AU8900242
(87) International publication number: WO8912505

(56) References cited:
- AU-B- 417 186
- GB-A- 1 217 155
- GB-A- 1 319 258

## Description

This invention relates to a process for grinding ceramic powders.

With the recent increase in the use of ceramic materials such as zirconia in technologically advanced applications, there has been considerable interest in the production of fine, pure ceramic powders. The art of grinding materials to fine sizes is well known and any convenient method known to the art may be used. In order to maintain a suitable rheology in the grinding process, it is essential that a dispersant be used. Among the more effective and therefore the more widely used of the dispersants are organic compounds, one such class of compounds being amines such as triethanolamine and 2-amino-2-methyl-propanol (AMP).

Processes utilising such amines have produced fine ceramic powders which have found ready acceptance in the marketplace. They are not, however, suitable for all uses, mainly because of the residual organic species adhering to the surface of the particles. Many manufacturers of ceramic articles wish the ceramic powder which they are to use to be completely free from any such organic residues. Hitherto, this has been achievable only either by the preferential adsorption of another more acceptable species on the particle surface thus displacing the organic species, or by burning off the organic residue by subjecting the powder to a suitably elevated temperature (the ceramic powder itself being unaffected by this treatment). However, the burning process gives a powder which is more difficult to redisperse. These additional processes also add to the cost of the end product.

It has now been found that it is possible to grind ceramic powders to give a fine powder free of organic species. There is therefore provided, according to the present invention, a process for grinding a ceramic powder, comprising subjecting the powder to a grinding medium in the presence of a dispersant present in a quantity sufficient to allow efficient grinding, the dispersant being selected from at least one of ammonia and alkylamines having a boiling point of 100°C maximum.

The invention is surprising in that ammonia and low molecular weight alkylamines are not normally considered to be dispersing agents. By "alkylamines" is meant of course compounds of the formula NR¹R²R³ where R¹, R² and R³ are selected from hydrogen and C₁ - C₄ alkyl groups, at least one of R¹, R² and R³ being a C₁-C₄ alkyl group. There is a particular preference for ammonia which is not only very volatile (such that no residue remains on the ground particles) inexpensive and relatively non-toxic, but which also manifests a surprisingly high dispersion and wetting ability in these ceramics systems. Ammonia is thus the preferred material, but alkylamines such as methylamine and ethylamine may be used. It is possible and permissible to use a combination of one or more of these dispersants.

The ceramic powders for use in this invention comprise any of the ceramic powders used in the manufacture of high grade ceramics. These include zirconia (either pure or modified with, for example yttria, magnesia or silica), yttria, alumina, silicon nitride and silicon carbide, and blends of such ceramic powders.

The apparatus in which grinding of the ceramic powder is carried out may be any apparatus suitable for such purposes. It may be, for example a ball mill, an agitated media mill (such as an attritor), a sand grinder or a bead mill. An especially preferred apparatus is an attritor, a relatively low energy device whose mode of operation causes virtually no degradation of the walls of the containment vessel and therefore no contamination of the finished product.

The media used for grinding can be any media suitable for the grinding of ceramic powders, for example, balls of yttria-modified zirconia, steatite or steel. In an especially preferred embodiment, the combination of fine grinding media of particle size 0.8-3.0 mm in an agitated media mill, the quantity of media being such that the average stand-off distance is from 50-90 »m, is an especially preferred one. Such a combination is described in copending Australian Patent Application No. 23770/88 and gives especially good results in the working of this invention. The priority of said application is claimed in EP-A-312 932.

The dispersant is added in a quantity sufficient to allow efficient grinding, that is, such that the contents of the grinding apparatus remain in a suitably fluid condition and grinding proceeds at a reasonable rate. This is readily ascertained by eye - if the contents are of a thick pasty consistency and do not flow readily, more dispersant is needed. This is added in the form of a solution in water (where the dispersant is a gas, such as ammonia or methylamine) or directly where the dispersant is a liquid at normal temperatures.

When grinding is complete, the ground ceramic powder may be recovered by any suitable means known to the art. The dispersant will evaporate, leaving a fine, organic-free ceramic powder ready for use in any application.

The invention is further illustrated by the following examples.

### Example 1

### Preparation of a ceramic powder.

A yttria-modified zirconia powder of surface area 5.0 m² g⁻¹ was milled in water in an attritor using 0.8 mm yttria-modified zirconia media (ex Shinegawa Co., Japan). Ammonium hydroxide was added at a rate of 2% NH₃ by weight on zirconia, and this permitted grinding at a powder loading (weight percentage of powder in the powder plus water mixture) of 60%.

After four hours' grinding, a particle size measurement, as measured on a "Microtrac" (trade mark) particle size analyser (ex Leeds and Northrup), showed that 50% of particles were of a size of less than 0.25 »m, and the viscosity as measured on a "Bohlin" (trade mark) VOR rheometer using a cup and bob cell was 6.8 mPa·s over the shear rate range of from 30 to 300 s⁻¹.

### Example 2

A comparative example showing the effect of omitting the ammonia.

Example 1 was repeated but omitting the ammonium hydroxide. It was found that in order to maintain a suitably low viscosity which would allow a particle size reduction of 50% less than 0.25 »m after 5 hours' milling, the powder loading could not be higher than 30%. The viscosity of the final milled powder dispersion was 5 mPa·s.

This powder was dried and water was added while kneading the powder with a palette knife until a very stiff paste was obtained. The water absorption was found to be 26.4% by weight.

To this paste was then added a 10% ammonia solution and kneading was continued. The stiff paste deflocculated to give a fluid dispersion with a viscosity of 7 mPa·s. The quantity of ammonia required was 0.12% NH₃ based on the zirconia solids.

### Example 3

### Preparation of a ceramic powder.

A co-precipitated TiO₂-ZrO₂ (equimolar) powder of surface area 23 m² g⁻¹ was milled in water using the 0.8 mm yttria-modified zirconia media used in Examples 1 and 2. Ammonium hydroxide was added at a rate of 1% NH₃ by weight on powder and this permitted grinding at a powder loading (weight percentage of powder in the powder plus water mixture) of 65%.

After 20 minutes' grinding, the particle size was measured as described in Example 1 and it was found that 50% of the particles were of a size of less than 0.75 »m. The dispersion had a low viscosity.

## Claims

1. A process for grinding a ceramic powder, comprising subjecting the powder to a grinding medium in the presence of a quantity of dispersant sufficient to allow efficient grinding, the dispersant being selected from at least one of ammonia and alkylamines having a boiling point of 100°C maximum.

2. A process according to claim 1, wherein the dispersant is selected from methylamine and ethylamine.

3. A process according to claim 1, wherein the dispersant is ammonia.

4. A process according to any one of claims 1 to 3, wherein the grinding is carried out in an attritor.

5. A process according to any one of claims 1 to 4, wherein the grinding is carried out using grinding media of 0.8 to 3.0 mm diameter.

6. A process according to any one of claims 1 to 5, wherein the quantity of grinding media present is such that the average stand-off distance is from 50 to 90 »m.

7. A process according to any one of claims 1 to 6, wherein the grinding comprises milling the ceramic powder in water.

8. A process according to claim 7, wherein the dispersant is added in the form of a solution in water.

9. A process according to claim 8, wherein the dispersant is ammonia or methylamine.

10. A process according to any one of claims 1 to 7, wherein a dispersant, which is a liquid at normal temperature, is added directly.

## Patentansprüche

1. Verfahren zum Mahlen eines keramischen Pulvers, das die Behandlung des Pulvers mit einem Mahlmedium in Gegenwart einer Menge eines Dispergiermittels umfaßt, die ausreicht, ein wirksames Mahlen zu ermöglichen, wobei das Dispergiermittel ausgewählt ist aus wenigstens einem von Ammoniak und Alkylaminen mit einem Siedepunkt von maximal 100°C.

2. Verfahren nach Anspruch 1, bei dem das Dispergiermittel ausgewählt ist aus Methylamin und Ethylamin.

3. Verfahren nach Anspruch 1, bei dem das Dispergiermittel Ammoniak ist.

4. Verfahren nach irgendeinem der Ansprüche 1 bis 3, bei dem das Mahlen in einer Reibmühle durchgeführt wird.

5. Verfahren nach irgendeinem der Ansprüche 1 bis 4, bei dem das Mahlen unter Verwendung eines Mahlmediums eines Durchmessers von 0,8 bis 3,0 mm durchgeführt wird.

6. Verfahren nach irgendeinem der Ansprüche 1 bis 5, bei dem die vorhandene Menge an Mahlmedium eine solche ist, daß der durchschnittliche freie Abstandsweg von 50 bis 90 »m beträgt.

7. Verfahren nach irgendeinem der Ansprüche 1 bis 6, bei dem das Mahlen ein Vermahlen des Keramikpulvers in Wasser umfaßt.

8. Verfahren nach Anspruch 7, bei dem das Dispergiermittel in Form einer Lösung in Wasser zugesetzt wird.

9. Verfahren nach Anspruch 8, bei dem das Dispergiermittel Ammoniak oder Methylamin ist.

10. Verfahren nach irgendeinem der Ansprüche 1 bis 7, bei dem ein Dispergiermittel, das bei Normaltemperatur eine Flüssigkeit ist, direkt zugesetzt wird.

## Revendications

1. Procédé de broyage d'une poudre céramique, comprenant la soumission de la poudre à un agent broyeur en présence d'une quantité de dispersant suffisante pour permettre un broyage efficace, le dispersant étant sélectionné parmi au moins un des éléments suivants : ammoniac et alkylamines ayant un point d'ébullition maximal de 100°C.

2. Procédé selon la revendication 1, dans lequel le dispersant est sélectionné parmi la méthylamine et l'éthylamine.

3. Procédé selon la revendication 1, dans lequel le dispersant est de l'ammoniac.

4. Procédé selon l'une quelconque des revendications 1 à 3, dans lequel le broyage s'effectue dans un attriteur.

5. Procédé selon l'une quelconque des revendications 1 à 4, dans lequel le broyage s'effectue au moyen d'agents broyeurs de 0,8 à 3,0 mm de diamètre.

6. Procédé selon l'une quelconque des revendications 1 à 5, dans lequel la quantité d'agents broyeurs présente est telle que la distance moyenne de séparation est comprise entre 50 et 90 »m.

7. Procédé selon l'une quelconque des revendications 1 à 6, dans lequel le broyage comprend le broyage de la poudre céramique dans de l'eau.

8. Procédé selon la revendication 7, dans lequel le dispersant est ajouté sous forme de solution aqueuse.

9. Procédé selon la revendication 8, dans lequel le dispersant est de l'ammoniac ou de la méthylamine.

10. Procédé selon l'une quelconque des revendications 1 à 7, dans lequel le dispersant qui est liquide à une température normale est ajouté directement.
